(19) Europäisches Patentamt

European Patent Office

Office européen des brevets

(11) **EP 0 955 528 B1**

(12) **EUROPÄISCHE PATENTSCHRIFT**

(45) Veröffentlichungstag und Bekanntmachung des Hinweises auf die Patenterteilung:
**08.11.2006 Patentblatt 2006/45**

(51) Int Cl.:
***G01F 23/284*** *(2006.01)*

(21) Anmeldenummer: **98108263.9**

(22) Anmeldetag: **06.05.1998**

(54) **Verfahren zur Messung des Füllstands eines Füllguts in einem Behälter nach dem Radarprinzip**

Method for measuring the level of a product in a container following the radar principle

Procédé de mesure du niveau d' un produit dans un réservoir suivant le principe radar

(84) Benannte Vertragsstaaten:
**DE FR GB IT SE**

(43) Veröffentlichungstag der Anmeldung:
**10.11.1999 Patentblatt 1999/45**

(73) Patentinhaber: **Endress + Hauser GmbH + Co. KG**
**79689 Maulburg (DE)**

(72) Erfinder:
• **Lalla, Robert Dr.**
**79541 Lörrach (DE)**
• **Müller, Roland Dipl.-Phys.**
**79585 Steinen (DE)**
• **Sinz, Michael**
**79589 Binzen (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**WO-A-90/09599          US-A- 5 656 774**

**Beschreibung**

Die Erfindung betrifft ein Verfahren zur Messung des Füllstands eines Füllguts in einem Behälter nach dem Radarprinzip, bei welchem durch eine oberhalb des höchsten vorkommenden Füllstands angeordnete Antenne elektromagnetische Wellen zur Oberfläche des im Behälter befindlichen Füllguts gesendet und reflektierte Echowellen empfangen werden und bei welchem die der Gruppenlaufzeit entsprechende Laufzeit der an der Füllgutoberfläche reflektierten Nutzechowellen gemessen wird, aus der der Füllstand berechnet wird.

Die Füllstandsmessung beruht bei diesem (z.B. in DE-A-43 27 333 offenbarten) Verfahren darauf, daß das Produkt aus der gemessenen Laufzeit und der Ausbreitungsgeschwindigkeit der elektromagnetischen Wellen gleich dem doppelten Abstand zwischen der Antenne und der Füllgutoberfläche ist, weil dieser Abstand von den elektromagnetischen Wellen zweimal durchlaufen wird. Der Füllstand ergibt sich dann aus der Differenz zwischen der bekannten Einbauhöhe der Antenne und dem durch die Messung bestimmten Abstand.

Voraussetzung für dieses Meßverfahren ist, daß die Ausbreitungsgeschwindigkeit der elektromagnetischen Wellen bekannt ist. In den meisten Fällen wird angenommen, daß diese Ausbreitungsgeschwindigkeit der Lichtgeschwindigkeit in Luft entspricht. Diese Annahme ist zulässig, wenn die Querabmessungen des Raumes, in dem sich die elektromagnetischen Wellen ausbreiten, groß gegen die Wellenlänge der elektromagnetischen Wellen sind. Da die Auflösung der Füllstandsmessung von der Wellenlänge der elektromagnetischen Wellen abhängt, erfolgt sie üblicherweise mit Mikrowellen, so daß die vorstehende Voraussetzung bei großen Behältern in der Regel erfüllt ist.

Wenn jedoch die Messung in einem im Behälter angebrachten Rohr mit einem im Verhältnis zur Wellenlänge kleinen Durchmesser erfolgt, beispielsweise in einem sogenannten Schwallrohr, oder wenn der Behälter selbst einen entsprechend kleinen Durchmesser hat, ist die obige Annahme nicht mehr zulässig. Ein Rohr oder ein Behälter mit kleinem Durchmesser, in dem sich elektromagnetische Wellen ausbreiten, wirkt wie ein Hohlleiter. Die Gruppengeschwindigkeit von elektromagnetischen Wellen ist in einem Hohlleiter abhängig von dessen Geometrie und um einen als Reduktionsfaktor bezeichneten Faktor kleiner als die Lichtgeschwindigkeit. Die Gruppengeschwindigkeit ist die Geschwindigkeit, mit der die Energie im Hohlleiter übertragen wird. Wenn die Laufzeitmessung, wie üblich, anhand der Amplitude der reflektierten Echowellen erfolgt, ist die gemessene Laufzeit die Gruppenlaufzeit. Der Reduktionsfaktor liegt typischerweise zwischen 0,7 und 1,0. Die Vernachlässigung des Reduktionsfaktors, d.h. die Annahme, daß er stets den Wert 1,0 hat, kann daher zu erheblichen Meßfehlern führen. Insbesondere bei hochgenauen Messungen ist es daher wesentlich, den Reduktionsfaktor genau zu kennen.

Bei herkömmlichen Verfahren zur Füllstandsmessung mit Mikrowellen, bei denen der Reduktionsfaktor zu berücksichtigen ist, wird vor der Inbetriebnahme ein Abgleich vorgenommen, indem eine Laufzeitmessung bei leerem Behälter oder bei einem genau bekannten Füllstand vorgenommen wird. Dieser Abgleich ist jedoch nicht möglich, wenn die Messung bei einem teilweise gefüllten Behälter eingeleitet werden muß, dessen Füllstand nicht genau bekannt ist. Ferner kann mit diesem einmaligen Abgleich nicht festgestellt werden, ob sich der Reduktionsfaktor im Laufe der Zeit ändert oder ob in verschiedenen Bereichen des Behälters unterschiedliche Reduktionsfaktoren bestehen.

Aufgabe der Erfindung ist die Schaffung eines Verfahrens, das eine genaue Bestimmung des Reduktionsfaktors während des Betriebs ermöglicht, ohne daß ein gesonderter Abgleich erforderlich ist.

Nach der Erfindung wird dies dadurch erreicht, daß zur Bestimmung des Reduktionsfaktors, um den sich die Gruppengeschwindigkeit der elektromagnetischen Wellen infolge der Geometrie des Ausbreitungsraums von der Ausbreitungsgeschwindigkeit im freien Raum unterscheidet, die Phasendifferenz der Nutzechowellen in bezug auf eine Referenzschwingung und die Gruppenlaufzeit bei verschiedenen Füllständen gemessen werden und der Reduktionsfaktor auf Grund der Änderungen der Phasendifferenz als Funktion der Gruppenlaufzeit bestimmt wird.

Bei dem erfindungsgemäßen Verfahren wird die Tatsache ausgenutzt, daß die Gruppengeschwindigkeit und die Phasengeschwindigkeit von elektromagnetischen Wellen in einem Hohlleiter voneinander verschieden sind, aber in einem bekannten Verhältnis zueinander stehen, das dem Quadrat des Reduktionsfaktors entspricht. Da die Änderung der Phase der elektromagnetischen Wellen mit der Phasengeschwindigkeit erfolgt, kann der Reduktionsfaktor aus der Änderung der bei verschiedenen Füllständen gemessenen Phasendifferenz und der Änderung der bei den gleichen Füllständen gemessenen Gruppenlaufzeit bestimmt werden. Voraussetzung für diese Bestimmung des Reduktionsfaktors ist lediglich, daß sich der Füllstand ändert, was bei jeder Füllstandsmessung als selbstverständlich vorausgesetzt werden kann.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung von Ausführungsbeispielen anhand der Zeichnungen. In den Zeichnungen zeigen:

Fig. 1   das Blockschema einer Anordnung zur Füllstandsmessung nach dem Radarprinzip,

Fig. 2   ein Diagramm zur Erläuterung der Bestimmung des Reduktionsfaktors gemäß einer ersten Ausführungsform des Verfahrens und

Fig. 3    ein Diagramm zur Erläuterung der Bestimmung des Reduktionsfaktors gemäß einer zweiten Ausführungsform des Verfahrens.

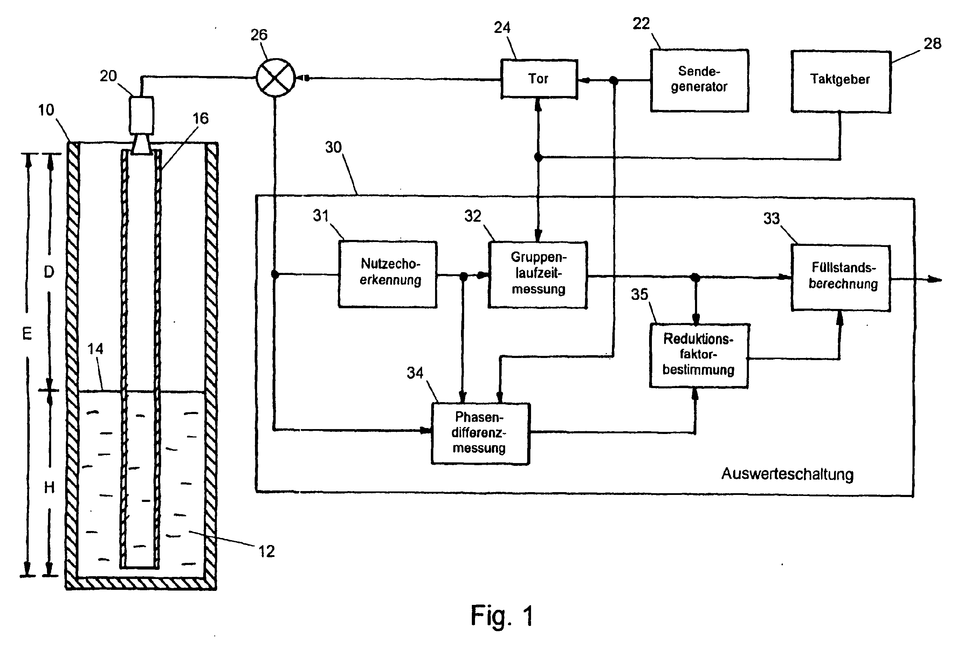

Figur 1 zeigt schematisch das Blockdiagramm einer mit Mikrowellen nach dem Impulslaufzeitverfahren arbeitenden Anordnung zur Messung des Füllstands in einem Behälter 10, der teilweise mit einer Flüssigkeit 12 gefüllt ist. Die Höhe H der Flüssigkeitsoberfläche 14 über dem Boden des Behälters 10 ist der zu messende Füllstand. Die Füllstandsmessung erfolgt nicht in dem gesamten Behälter, sondern in einem verhältnismäßig engen Rohr 16, das sich nahezu über die gesamte Höhe des Behälters 12 erstreckt und am unteren Ende offen ist, so daß es ebenfalls bis zur Höhe H mit der Flüssigkeit 12 gefüllt ist.

Zur Füllstandsmessung ist oberhalb des höchsten vorkommenden Füllstands eine Antenne 20 so angeordnet, daß sie Mikrowellen in das Innere des Rohres 16 aussenden und die an der Füllgutoberfläche 14 reflektierten Echowellen empfangen kann. Ein Sendegenerator 22 erzeugt kontinuierlich eine Hochfrequenzschwingung mit der Frequenz der auszusendenden Mikrowellen. Der Ausgang des Sendegenerators 22 ist über eine Torschaltung 24 und eine Sende-Empfangs-Weiche 26 mit der Antenne 20 verbunden. Ein Taktgeber 28 erzeugt periodische Sendetaktimpulse, die an den Steuereingang der Torschaltung 24 angelegt werden. Durch jeden Sendetaktimpuls wird die Torschaltung kurzzeitig geöffnet, so daß die vom Sendegenerator 22 erzeugte Hochfrequenzschwingung für ein kurzes Sendeintervall an die Antenne 20 angelegt wird, die somit in jeder Sendetaktperiode einen kurzen Mikrowellenimpuls aussendet. Der Mikrowellenimpuls pflanzt sich durch das Rohr 16 bis zur Oberfläche 14 der Flüssigkeit 12 fort, und die an der Flüssigkeitsoberfläche 14 reflektierten Mikrowellen kehren als Echoimpuls zu der Antenne 20 zurück. Dieser Echoimpuls wird in dem Empfangszeitintervall empfangen, das sich in jeder Sendetaktperiode an das kurze Sendeintervall anschließt.

Alle Mikrowellensignale, die von der Antenne 20 in jedem Empfangsintervall empfangen werden, werden über die Sende-Empfangs-Weiche 26 einer Auswerteschaltung 30 zugeführt. Diese Mikrowellensignale können außer dem an der Oberfläche 14 reflektierten Nutzechoimpuls auch Störsignale enthalten. In einem Funktionsblock 31 der Auswerteschaltung 30 wird zunächst der Nutzechoimpuls identifiziert. Dies kann nach einem üblichen Verfahren dadurch geschehen, daß die Hüllkurve der im gesamten Empfangsintervall empfangenen Mikrowellensignale gebildet wird. Diese Hüllkurve stellt die empfangene Signalamplitude als Funktion der Zeit dar und bildet die sogenannte Echofunktion, die beispielsweise in digitalisierter Form gespeichert werden kann. Die Identifizierung des Nutzechoimpulses erfolgt durch die Auswertung des Amplitudenverlaufs der Echofunktion nach vorgegebenen Kriterien, beispielsweise durch Ermittlung des höchsten Amplitudenwertes unter Berücksichtigung der laufzeitabhängigen Dämpfung des Echosignals.

In einem Funktionsblock 32 erfolgt dann die Bestimmung der Laufzeit des Nutzechoimpulses. Hierzu empfängt der Funktionsblock 32 einerseits die vom Taktgeber 28 gelieferten Sendetaktimpulse und andererseits vom Funktionsblock 31 ein Signal, das den Zeitpunkt des Empfangs eines markanten Punktes des in der Echofunktion ermittelten Nutzechoimpulses angibt. Dieser markante Punkt kann beispielsweise der Spitzenwert des Nutzechoimpulses sein, oder ein Punkt, an dem der Signalwert um einen vorgegebenen Wert, beispielsweise um 3 dB, geringer als der Spitzenwert ist. Der Funktionsblock 32 mißt in jeder Sendetaktperiode den Zeitabstand zwischen dem Auftreten des vom Taktgeber 28 abgegebenen Sendetaktimpulses und dem Zeitpunkt des Empfangs des gewählten markanten Punktes des Nutzechoimpulses.

Dieser Zeitabstand ist für die Laufzeit der Mikrowellen von der Antenne 20 zur Füllgutoberfläche 14 und wieder zurück zur Antenne 20 repräsentativ.

Der Funktionsblock 32 liefert zu einem Funktionsblock 33 ein Signal, das die gemessene Laufzeit $\tau$ angibt. Der Funktionsblock 33 berechnet aus der gemessenen Laufzeit $\tau$ zunächst den Abstand D der Füllgutoberfläche 14 von der Antenne 20 nach der Formel

$$D = \frac{1}{2} \cdot v \cdot \tau \qquad\qquad (1)$$

worin v die Ausbreitungsgeschwindigkeit der Mikrowellen ist. Der Faktor ½ berücksichtigt die Tatsache, daß die Mikrowellen die Strecke D zweimal zurücklegen. Aus dem berechneten Abstand D und der bekannten Einbauhöhe E der Antenne 20 über dem Boden des Behälters 10 ergibt sich dann der gesuchte Füllstand H nach der Beziehung

$$H = E - D \qquad\qquad (2)$$

Der bisher beschriebene Teil der Auswerteschaltung 30 entspricht dem üblichen Aufbau von Füllstandsmeßgeräten, die mit Mikrowellen nach dem Impulslaufzeitverfahren arbeiten. Dabei wird üblicherweise unterstellt, daß die Ausbreitungsgeschwindigkeit der Mikrowellen auf dem Weg zwischen der Antenne 20 und der Füllgutoberfläche 14 der Lichtgeschwindigkeit c in Luft entspricht.

Diese Annahme trifft jedoch nicht mehr zu, wenn sich die Mikrowellen, wie in Figur 1 dargestellt, in einem Rohr mit kleinem Durchmesser ausbreiten oder wenn der Behälter selbst einen entsprechend kleinen Durchmesser hat. Ein Rohr oder Behälter mit kleinem Durchmesser, in dem sich Mikrowellen ausbreiten, wirkt wie ein Hohlleiter. Mikrowellen breiten sich in einem Hohlleiter mit einer Gruppengeschwindigkeit $v_{Gr}$ aus, die um einen Reduktionsfaktor $F_R$ kleiner als die Lichtgeschwindigkeit c in Luft ist:

$$v_{Gr} = F_R \cdot c \qquad (3)$$

Der Reduktionsfaktor $F_R$ ist von der Wellenlänge der Mikrowellen und von der Geometrie des Hohlleiters abhängig und liegt bei den Anwendungen zur Füllstandsmessung typischerweise zwischen 0,7 und 1,0.

Demgegenüber ist die Phasengeschwindigkeit $v_{Ph}$ der Mikrowellen in einem Hohlleiter um den Kehrwert des Reduktionsfaktors $F_R$ größer als die Lichtgeschwindigkeit c in Luft:

$$v_{Ph} = \frac{1}{F_R} \cdot c \qquad (4)$$

Die Gruppengeschwindigkeit $v_{Gr}$ ist die Geschwindigkeit, mit der sich die Energie im Hohlleiter ausbreitet. Da im Funktionsblock 32 der Auswerteschaltung 30 von Figur 1 der Zeitabstand zwischen der Aussendung der Mikrowelle und dem Eintreffen eines vorbestimmten Amplitudenwertes gemessen wird, ist der gemessene Zeitabstand die der Ausbreitung mit der Gruppengeschwindigkeit $v_{Gr}$ entsprechende Gruppenlaufzeit $\tau_{Gr}$:

$$\tau_{Gr} = \frac{2D}{v_{Gr}} = \frac{2D}{c} \cdot \frac{1}{F_R} \qquad (5)$$

und dementsprechend ergibt sich der gesuchte Abstand aus der gemessenen Gruppenlaufzeit $\tau_{Gr}$ zu:

$$D = \frac{1}{2} \cdot \tau_{Gr} \cdot v_{Gr} = \frac{1}{2} \cdot \tau_{Gr} \cdot F_R \cdot c \qquad (6)$$

Für die genaue Berechnung des Füllstands im Funktionsblock 33 ist daher die Kenntnis des Reduktionsfaktors $F_R$ erforderlich.

In entsprechender Weise ist die Phasenlaufzeit $\tau_{Ph}$, die beim doppelten Durchlaufen der Strecke D auftritt, gegeben durch

$$\tau_{Ph} = \frac{2D}{v_{Gr}} = \frac{2D}{c} \cdot F_R \qquad (7)$$

Die Auswerteschaltung 30 von Figur 1 ist so ausgebildet, daß im laufenden Betrieb jederzeit der aktuelle Reduktionsfaktor $F_R$ ermittelt und bei der Berechnung des Füllstandes aus der gemessenen Gruppenlaufzeit $\tau_{Gr}$ berücksichtigt werden kann.

Zu diesem Zweck enthält die Auswerteschaltung 30 zwei weitere Funktionsblöcke 34 und 35. Im Funktionsblock 34 wird die Phasendifferenz $\varphi$ gemessen, die das empfangene Mikrowellensignal bezüglich einer Referenzschwingung in dem Zeitpunkt hat, für den die Gruppenlaufzeit $\tau_{Gr}$ im Funktionsblock 32 bestimmt wird. Dieser Zeitpunkt wird dem Funktionsblock 34 durch das Ausgangssignal des Funktionsblocks 31 mitgeteilt. Die Referenzschwingung hat vorzugsweise genau die gleiche Frequenz wie die gesendete Mikrowelle; bei dem in Figur 1 dargestellten Ausführungsbeispiel wird als Referenzschwingung die vom Sendegenerator 22 erzeugte Hochfrequenzschwingung verwendet, die dem Funktionsblock 34 zugeführt wird. Die Phasendifferenz $\varphi$ kann natürlich nur bis auf Vielfache von $2\pi$, also mod $2\pi$ (modulo $2\pi$) ermittelt werden. Die ermittelte Phasendifferenz $\varphi$ mod $2\pi$ wird dem Funktionsblock 35 mitgeteilt, der außerdem die gemessene Gruppenlaufzeit $\tau_{Gr}$ vom Funktionsblock 32 empfängt. Jedes Wertepaar einer gemessenen Gruppenlaufzeit $\tau_{Gr}$ und einer gemessenen Phasendifferenz $\varphi$ mod $2\pi$ entspricht einer bestimmten durchlaufenen Strecke 2D, also einem bestimmten Füllstand H. Wenn sich der Füllstand H ändert, ändern sich die gemessenen Werte der Gruppenlaufzeit $\tau_{Gr}$ und der Phasendifferenz $\varphi$ mod $2\pi$. Im Betrieb eines Füllstandsmeßgeräts ändert sich der Füllstand H und damit der Abstand D in der Regel häufig. Diese Tatsache wird zur Bestimmung des Reduktionsfaktors $F_R$ in der Auswerteschaltung 30 von Figur 1 ausgenutzt. Hierzu wird im Funktionsblock 35 der Reduktionsfaktor $F_R$ berechnet und dem Funktionsblock 33 zugeführt, in dem er zur Berichtigung der Füllstandsberechnung verwendet wird. Die Berechnung erfolgt auf Grund von unterschiedlichen Füllständen entsprechenden Wertepaaren der Phasendifferenz $\varphi$ mod $2\pi$ und der Gruppenlaufzeit $\tau_{Gr}$ nach einem der nachfolgend beschriebenen Verfahren.

Verfahren A:

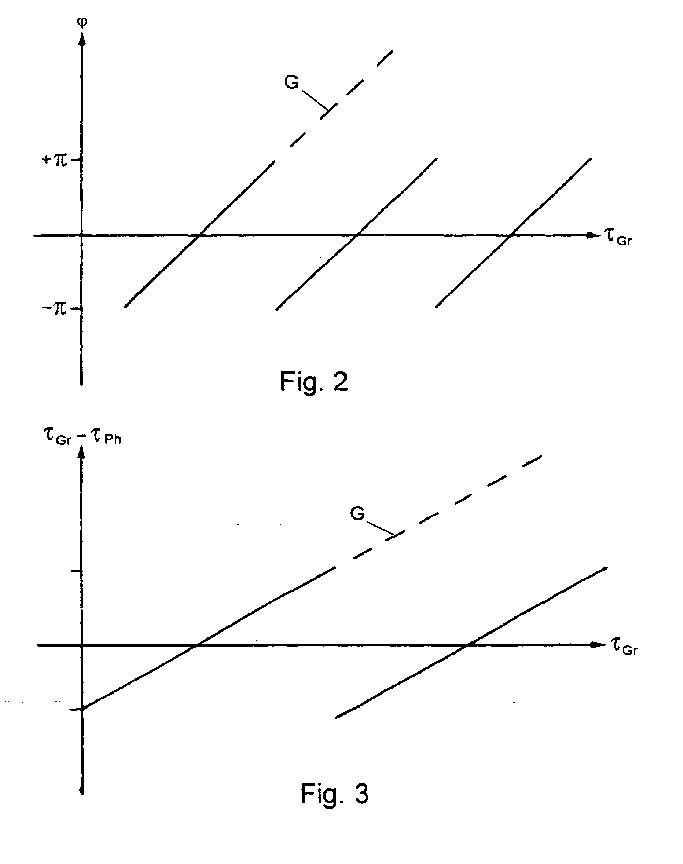

Im Funktionsblock 35 werden zusammengehörige Wertepaare der Gruppenlaufzeit $\tau_{Gr}$ und der Phasendifferenz $\varphi$ mod $2\pi$ aufgezeichnet. Wenn man die Phasendifferenzen $\varphi$ mod $2\pi$ in einem Diagramm als Funktion der Gruppenlaufzeit $\tau_{Gr}$ darstellt, erhält man die in Figur 2 in vollen Linien dargestellte Kurve. Die Phasendifferenz $\varphi$ ändert sich periodisch mit der Gruppenlaufzeit $\tau_{Gr}$, wobei die Periodenlänge ungefähr dem Kehrwert der Referenzfrequenz entspricht. Umgerechnet in eine räumliche Distanz entspricht eine Periode einer Wellenlänge. Bei einer Frequenz von einigen Gigahertz sind dies einige Zentimeter. Nach jeder Periode springt die Phasendifferenz $\varphi$ um $2\pi$, im Diagramm von Figur 2 von $+\pi$ nach $-\pi$.

In einem nächsten Schritt werden die Phasensprünge durch Plausibilitätsbetrachtungen eliminiert. Wenn für einen kleinen Unterschied in der Laufzeit ein großer Unterschied in der Phasendifferenz auftritt, so bedeutet dies, daß ein Phasensprung vorliegt, der durch Addition bzw. Subtraktion von $2\pi$ oder von Vielfachen von $2\pi$ korrigiert wird. Der Startpunkt, das heißt der Füllstand, bei dem diese Korrektur begonnen wird, ist hierbei unwichtig. Diese Prozedur führt zu einem im wesentlichen linear ansteigenden Kurvenverlauf, wie er in Figur 2 bei G angedeutet ist.

Zur Vermeidung einer Unsicherheit über die Anzahl der Phasensprünge zwischen zwei aufeinanderfolgenden Messungen wird vorzugsweise ein Schätzwert für die maximale Geschwindigkeit einer Füllstandsänderung angenommen. Der zeitliche Abstand $\Delta t$ zwischen zwei aufeinanderfolgenden Messungen muß ausreichend gering sein, so daß der Quotient aus der Wellenlänge $\lambda$ und dem zeitlichen Abstand $\Delta t$ groß ist im Vergleich zur maximalen Geschwindigkeit $v_{max}$ einer Füllstandsänderung:

$$\frac{\lambda}{\Delta t} \gg v_{max} \qquad\qquad (8)$$

Ändert sich der Füllstand um eine Strecke $\Delta x$, so ändert sich die Gruppenlaufzeit $\tau_{Gr}$ und die Phasendifferenz $\varphi$ um entsprechende Werte $\Delta\tau_{Gr}$ bzw. $\Delta\varphi$. Für den Fall, daß die Referenzfrequenz $\omega_{ref}$ gleich der Sendefrequenz $\omega_s$ ist:

$$\omega_{ref} = \omega_s = \omega \qquad\qquad (9)$$

bestehen die folgenden Beziehungen

$$\Delta x = \frac{1}{2} \cdot \frac{\Delta\varphi}{\omega} \cdot c \cdot \frac{1}{F_R} \qquad\qquad (10)$$

$$\Delta x = \frac{1}{2} \cdot \Delta \tau_{Gr} \cdot c \cdot F_R \qquad (11)$$

Durch Gleichsetzen der beiden Gleichungen für $\Delta x$ erhält man die Steigung m der Geraden G:

$$m = \frac{\Delta\varphi}{\Delta\tau_{Gr}} = F_R^2 \cdot \omega \qquad (12)$$

Die Steigung der Geraden wird vorzugsweise durch eine statistische Methode ermittelt, beispielsweise nach der Methode der kleinsten Quadrate. Es empfiehlt sich, Häufungspunkte zusammenzufassen, um statistische Fehlerquellen auszuschließen. Dies ist besonders dann vorteilhaft, wenn sich der Füllstand über einen langen Zeitraum nur wenig ändert.

Aus der Steigung m der Geraden G und der Frequenz $\omega$ läßt sich der Reduktionsfaktor $F_R$ wie folgt berechnen:

$$F_R = \sqrt{\frac{m}{\omega}} = \sqrt{\frac{\Delta\varphi / \Delta\tau_{Gr}}{\omega}} \qquad (13)$$

Verfahren B:

Wie im Verfahren A werden die Füllstandsänderungen verfolgt und für einzelne Füllstände jeweils die zusammengehörigen Wertepaare der Gruppenlaufzeit $\tau_{Gr}$ und der Phasendifferenz $\varphi$ mod $2\pi$ gemessen. Zum Unterschied vom Verfahren A wird im Funktionsblock 35 für jede gemessene Phasendifferenz $\varphi$ die zugehörige Phasenlaufzeit $\tau_{Ph}$ bestimmt:

$$\tau_{Ph} = \frac{\varphi}{\omega} \qquad (14)$$

Auch diese Phasenlaufzeit $\tau_{Ph}$ ist nur mod $2\pi/\omega$ bekannt.

Der Reduktionsfaktor $F_R$ wird bei diesem Verfahren nicht aus den zusammengehörigen Wertepaaren der Gruppenlaufzeit $\tau_{Gr}$ und der Phasendifferenz $\varphi$ ermittelt, sondern aus zusammengehörigen Wertepaaren der Gruppenlaufzeit $\tau_{Gr}$ und der Differenz $\tau_{Gr} - \tau_{Ph}$ zwischen der Gruppenlaufzeit $\tau_{Gr}$ und der Phasenlaufzeit $\tau_{Ph}$. Diese Differenz $\tau_{Gr} - \tau_{Ph}$ ist ebenfalls nur mod $(2\pi/\omega)$ bekannt. Für das zweimalige Durchlaufen einer Strecke X gilt:

$$\tau_{Gr} = 2 \cdot \frac{x}{v_{Gr}} = 2 \cdot \frac{x}{c} \cdot \frac{1}{F_R} \qquad (15)$$

$$\tau_{Ph} = 2 \cdot \frac{x}{v_{Ph}} = 2 \cdot \frac{x}{c} \cdot F_R \qquad (16)$$

$$(\tau_{Gr} - \tau_{Ph}) \bmod \frac{2\pi}{\omega} = \left[ 2 \cdot \frac{x}{c} \cdot \left( \frac{1}{F_R} - F_R \right) \right] \bmod \frac{2\pi}{\omega} \qquad (17)$$

Trägt man diese Differenz als Funktion von $\tau_{Gr}$ auf, so erhält man das in Figur 3 dargestellte Diagramm. Die Kurve hat den gleichen Verlauf wie die gemäß dem Verfahren A aufgenommene Kurve von Figur 2, jedoch ist die Periodendauer T wesentlich größer. Sie ist gegeben durch:

$$T = \frac{1}{\omega \cdot \left(1 - F_R^2\right)} \qquad (18)$$

Umgerechnet in eine räumliche Strecke entspricht bei einer Frequenz von einigen Gigahertz eine Periode ungefähr einem Meter. Ein Phasensprung tritt immer dann auf, wenn der Laufzeitunterschied zwischen den sich mit der Phasengeschwindigkeit und den sich mit der Gruppengeschwindigkeit ausbreitenden Signalkomponenten größer als eine Periode der Referenzfrequenz ist.

Wie im Verfahren A werden die Phasensprünge durch Plausibilitätsbetrachtungen eliminiert, wodurch die Geradenstücke zu einer fortlaufenden Gerade G aneinandergereiht werden. Zur Vermeidung von Unsicherheiten über die Anzahl der Phasensprünge zwischen aufeinanderfolgenden Messungen wird vorzugsweise ein Schätzwert für die maximale Geschwindigkeit einer Füllstandsänderung angenommen. Der zeitliche Abstand $\Delta t$ zwischen zwei aufeinanderfolgenden Messungen muß ausreichend gering sein, so daß der Quotient aus der Wellenlänge $\lambda$ und dem zeitlichen Abstand $\Delta t$ groß ist im Vergleich zur maximalen Geschwindigkeit einer Füllstandsänderung.

Ändert sich der Füllstand um eine Distanz $\Delta x$, so ändern sich die Gruppenlaufzeit $\tau_{Gr}$ und die Phasenlaufzeit $\tau_{Ph}$ um entsprechende Werte $\Delta\tau_{Gr}$ bzw. $\Delta\tau_{Ph}$:

$$\Delta\tau_{Gr} = 2 \cdot \frac{\Delta x}{c} \cdot \frac{1}{F_R} \qquad (19)$$

$$\Delta\tau_{Ph} = 2 \cdot \frac{\Delta x}{c} \cdot F_R \qquad (20)$$

Demzufolge ändert sich die Differenz $\tau_{Gr} - \tau_{Ph}$ um:

$$\Delta\tau_{Gr} - \Delta\tau_{Ph} = 2 \cdot \frac{\Delta x}{c} \cdot \left(\frac{1}{F_R} - F_R\right) \qquad (21)$$

Die Steigung m der in Figur 3 dargestellten Geraden G ist:

$$m = \frac{\Delta\tau_{Gr} - \Delta\tau_{Ph}}{\Delta\tau_{Gr}} = 1 - F_R^2 \qquad (22)$$

Die Steigung m der Geraden G wird vorzugsweise durch eine statistische Methode ermittelt, beispielsweise nach der Methode der kleinsten Quadrate. Es empfiehlt sich, Häufigkeitspunkte zusammenzufassen, um statistische Fehlerquellen auszuschalten. Dies ist vor allem dann vorteilhaft, wenn sich der Füllstand über einen langen Zeitraum nur wenig ändert.

Aus der Steigung m der Geraden G läßt sich der Reduktionsfaktor $F_R$ wie folgt berechnen:

$$F_R = \sqrt{1-m} = \sqrt{1 - \frac{\Delta\tau_{Gr} - \Delta\tau_{Ph}}{\Delta\tau_{Gr}}} \qquad (23)$$

Wenn bereits ein Näherungswert $F_{Rn}$ für den Reduktionsfaktor bekannt ist, beipielsweise aufgrund einer früheren Messung oder aufgrund einer Schätzung, besteht eine Abänderung des Verfahrens B darin, daß nicht die Differenz $\tau_{Gr} - \tau_{Ph}$ zwischen der Gruppenlaufzeit $\tau_{Gr}$ und der Phasenlaufzeit $\tau_{Ph}$ angewendet wird, sondern die Differenz

$$\tau_{Gr} - \tau_{Ph} \cdot \frac{1}{F_{Rn}^2} \qquad (24)$$

zwischen der Gruppenlaufzeit $\tau_{Gr}$ und der mit dem Kehrwert des Quadrats des Näherungswertes $F_{Rn}$ multiplizierten Phasenlaufzeit $\tau_{Ph}$. Wird diese Differenz als Funktion der Gruppenlaufzeit $\tau_{Gr}$ in einem Diagramm aufgetragen, so zeigt dieses Diagramm einen ähnlichen Verlauf wie das Diagramm von Figur 3, jedoch ist die Steigung der Geradensegmente um so geringer, je genauer der Näherungswert $F_{Rn}$ ist. Wenn sich der Näherungswert $F_{Rn}$ von dem wirklichen Wert $F_R$ um einen Faktor $\varepsilon$ unterscheidet:

$$F_R = F_{Rn} \cdot \varepsilon \qquad (25)$$

so gilt für die Änderung der Gruppenlaufzeit $\Delta\tau_{Gr}$ und der Phasenlaufzeit $\Delta\tau_{Ph}$ bei einer Änderung des Füllstands um $\Delta x$:

$$\Delta\tau_{Gr} = 2 \cdot \frac{\Delta x}{c} \cdot \frac{1}{F_{Rn} \cdot \varepsilon} \qquad (26)$$

$$\Delta\tau_{Ph} = 2 \cdot \frac{\Delta x}{c} \cdot F_{Rn} \cdot \varepsilon \qquad (27)$$

Für die Steigung m der Geraden G gilt in diesem Fall:

$$m = \frac{\Delta\tau_{Gr} - \Delta\tau_{Ph} \cdot \frac{1}{F_{Rn}^2}}{\Delta\tau_{Gr}} = \frac{2 \cdot \frac{\Delta x}{c} \cdot \frac{1}{F_{Rn}} \cdot \left(\frac{1}{\varepsilon} - \varepsilon\right)}{2 \cdot \frac{\Delta x}{c} \cdot \frac{1}{F_{Rn} \cdot \varepsilon}} = 1 - \varepsilon^2 \qquad (28)$$

Daraus läßt sich der Faktor $\varepsilon$ wie folgt berechnen:

$$\varepsilon = \sqrt{1 - \frac{\Delta\tau_{Gr} - \Delta\tau_{Ph} \cdot \frac{1}{F_{Rn}}}{\Delta\tau_{Gr}}} \qquad (29)$$

Der Reduktionsfaktor $F_R$ ergibt sich aus dem Näherungswert $F_{Rn}$ und dem Faktor $\varepsilon$ nach der Formel (25).

Diese Variante bietet den Vorteil, daß zur Berechnung des Reduktionsfaktors auf Meßdaten und Programmelemente zurückgegriffen werden kann, die zur eigentlichen Füllstandsmessung ohnehin vorhanden sind.

Natürlich sind die in Figur 1 dargestellten Funktionsblöcke, die die verschiedenen Messungen und Berechnungen durchführen, nicht durch diskrete Schaltungen gebildet, sondern durch entsprechende Programmierung eines Mikrocomputers. Dies gilt vor allem für den Funktionsblock 35, der die Meßwertepaare für die Gruppenlaufzeit $\tau_{Gr}$ und die Phasendifferenz $\varphi$ empfängt und nach einem der beschriebenen Verfahren auswertet.

Mit jedem der beschriebenen Verfahren ist es möglich, den Reduktionsfaktor zu berechnen, ohne daß der aktuelle Füllstand bekannt ist. Auch können im Betrieb auftretende Änderungen des Reduktionsfaktors, beispielsweise durch Ansatzbildung, erkannt und entsprechend kompensiert werden. Ferner ist auch eine Bestimmung unterschiedlicher Reduktionsfaktoren für verschiedene Behälterbereiche möglich.

Die zuvor beschriebenen Verfahren sind auch bei der Füllstandsmessung nach dem Time-Domain-Reflectometry-Prinzip anwendbar, bei dem die Mikrowellenimpulse an einem in den Behälter ragenden Seil (Goubau-Leitung) entlangläuft und an der Füllgutoberfläche reflektiert wird, wie dies beispielsweise aus der Druckschrift DE 44 04 745 C2 bekannt ist. Auch auf einer solchen Goubau-Leitung pflanzen sich die Mikrowellen mit Gruppen- und Phasengeschwindigkeiten fort, die von der Lichtgeschwindigkeit in Luft verschieden sind.

**Patentansprüche**

1. Verfahren zur Messung des Füllstands eines Füllguts in einem Behälter nach dem Radarprinzip, bei welchem durch eine oberhalb des höchsten vorkommenden Füllstands angeordnete Antenne elektromagnetische Wellen zur Oberfläche des im Behälter befindlichen Füllguts gesendet und reflektierte Echowellen empfangen werden und bei welchem die der Gruppenlaufzeit entsprechende Laufzeit der an der Füllgutoberfläche reflektierten Nutzechowellen gemessen wird, aus der der Füllstand berechnet wird, **dadurch gekennzeichnet, dass** zur Bestimmung des Reduktionsfaktors, um den sich die Gruppengeschwindigkeit der elektromagnetischen Wellen infolge der Geometrie des Ausbreitungsraums von der Ausbreitungsgeschwindigkeit im freien Raum unterscheidet, die Phasendifferenz der Nutzechowellen in Bezug auf eine Referenzschwingung und die Gruppenlaufzeit bei verschiedenen Füllständen gemessen werden und der Reduktionsfaktor auf Grund der Änderungen der Phasendifferenz als Funktion der Gruppenlaufzeit bestimmt wird.

2. Verfahren nach Anspruch 1, **dadurch gekennzeichnet, dass** der Reduktionsfaktor aus der Steigung der die Phasendifferenz als Funktion der Gruppenlaufzeit darstellenden Kurve berechnet wird.

3. Verfahren nach Anspruch 1, **dadurch gekennzeichnet, dass** aus jeder gemessenen Phasendifferenz die entsprechende Phasenlaufzeit berechnet wird und dass der Reduktionsfaktor aus der Steigung der Kurve berechnet wird, die die Differenz zwischen der Gruppenlaufzeit und der Phasenlaufzeit als Funktion der Gruppenlaufzeit darstellt.

4. Verfahren nach Anspruch 1, **dadurch gekennzeichnet, dass** aus jeder gemessenen Phasendifferenz die entsprechende Phasenlaufzeit berechnet wird und dass der Reduktionsfaktor aus der Steigung der Kurve berechnet wird, die die Differenz zwischen der Gruppenlaufzeit und der mit dem Quadrat des Kehrwerts eines Näherungswertes des Reduktionsfaktors multiplizierten Phasenlaufzeit als Funktion der Gruppenlaufzeit darstellt.

5. Verfahren nach einem der Ansprüche 2 bis 4, **dadurch gekennzeichnet, dass** die Mehrdeutigkeiten der nur modulo $2\pi$ bekannten Funktionswerte durch Plausibilitätsbetrachtungen eliminiert werden.

**Claims**

1. A radar-based method of measuring the level of a material in a vessel in which an antenna arranged above the highest level anticipated radiates electromagnetic waves to the surface of the material contained in the vessel and receives reflected echo waves and in which the transit time corresponding to the group delay of the wanted echo waves reflected by the material surface is measured from which the level is computed, wherein for determining the reduction factor by which the group velocity of the electromagnetic waves differs from the velocity of propagation in the free space due to the geometry of the propagation space, the difference in phase of the wanted echo waves relative to a reference oscillation and the group delay for various levels are measured and the reduction factor determined on the basis of the changes in the difference in phase as a function of the group delay.

2. The method as set forth in claim 1, wherein the reduction factor is computed from the slope of the curve representing the phase difference as a function of the group delay.

3. The method as set forth in claim 1, wherein from each measured phase difference the corresponding phase delay is computed and the reduction factor is computed from the slope of the curve representing the difference between the group delay and the phase delay as a function of the group delay.

4. The method as set forth in claim 1, wherein from each measured phase difference the corresponding phase delay is computed and the reduction factor is computed from the slope of the curve representing the difference between the group delay and the phase delay multiplied by the square of the reciprocal of an approximation value of the reduction factor as a function of the group delay.

5. The method as set forth in claim 2 to claim 4, wherein ambiguities in the function values known only modulo $2\pi$ are eliminated by plausibility considerations.

**Revendications**

1. Procédé destiné à la mesure du niveau d'un produit dans un récipient d'après le principe du radar, au cours duquel des ondes électromagnétiques sont envoyées sur la surface du produit se trouvant dans le récipient et des ondes d'écho sont reçues au moyen d'une antenne disposée au-dessus du niveau maximal, et au cours duquel est mesuré le temps de propagation, correspondant au temps de propagation de groupe, des ondes d'écho utiles sur la surface du produit, à partir duquel le niveau est calculé, **caractérisé en ce que** pour la détermination du facteur de réduction, selon lequel la vitesse de groupe des ondes électromagnétiques se distingue de la vitesse de propagation à l'air libre en raison de la géométrie de la zone de propagation, la différence de phase des ondes d'écho est mesurée par rapport à une oscillation de référence et le temps de propagation de groupe est mesuré pour différents niveaux et le facteur de réduction est déterminé sur la base des changements de la différence de phase en tant que fonction du temps de propagation de groupe.

2. Procédé selon la revendication 1, **caractérisé en ce que** le facteur de réduction est calculé à partir de la pente de la courbe représentant la différence de phase en tant que fonction du temps de propagation de groupe.

3. Procédé selon la revendication 1, **caractérisé en ce que** le temps de propagation de phase correspondant est calculé à partir de chaque différence de phase mesurée et que le facteur de réduction est calculé à partir de la pente de la courbe, qui représente la différence entre le temps de propagation de groupe et le temps de propagation de phase en tant que fonction du temps de propagation de groupe.

4. Procédé selon la revendication 1, **caractérisé en ce que** le temps de propagation de phase correspondant est calculé à partir de chaque différence de phase mesurée et que le facteur de réduction est calculé à partir de la pente de la courbe, qui représente la différence entre le temps de propagation de groupe et le temps de propagation de phase multiplié par le carré de l'inverse d'une valeur approchée du facteur de réduction en tant que fonction du temps de propagation de groupe.

5. Procédé selon l'une des revendications 2 à 4, **caractérisé en ce que** les équivoques des seules valeurs de fonction modulo $2\pi$ connues sont éliminées par des considérations de plausibilité.

Fig. 1

Fig. 2

Fig. 3